# EUROPEAN PATENT APPLICATION

(11) **EP 2 284 668 A2**
(43) Date of publication of application: **16.02.2011**
(21) Application number: 10251084.9
(22) Date of filing: 15.06.2010
(51) Int. Cl.: G06F 3/042

(54) **Interactive input system and components therefor**

(30) Priority: 15.06.2009 US 187262 P
(71) Applicant: SMART Technologies ULC, Calgary, Alberta T2L 1Y1 (CA)
(72) Inventor: Sirotich, Roberto, Calgary, Alberta T2Z 3R1 (CA); Kroeker, Wallace, Calgary, Alberta T2J 2T9 (CA); Wright, Joe, Strathmore, Alberta T1P 1J6 (CA)
(74) Representative: Naismith, Robert Stewart

(57) **Abstract**

A display panel for an interactive input system comprises first and second touch surfaces on opposite major sides thereof and a touch detection arrangement to detect touch input on one or both of the touch surfaces.

## Description

### Field of the Invention

The present invention relates generally to interactive input systems and particularly to an interactive input system and components therefor.

### Background of the Invention

Interactive input systems that allow users to inject input (e.g. digital ink, mouse events, etc.) into an application program using an active pointer (e.g. a pointer that emits light, sound or other signal), a passive pointer (e.g. a finger, cylinder or other object) or other suitable input device such as for example, a mouse or trackball, are well known. These interactive input systems include but are not limited to: touch systems comprising touch panels employing analog resistive or machine vision technology to register pointer input such as those disclosed in U.S. Patent Nos. 5,448,263; 6,141,000; 6,337,681; 6,747.636; 6,803,906; 7,232,986; 7,236,162; 7,274,356; and 7,460,110 assigned to SMART Technologies ULC of Calgary, Alberta, Canada, assignee of the subject application, the contents of which are incorporated herein by reference in their entirety; touch systems comprising touch panels employing electromagnetic, capacitive, acoustic or other technologies to register pointer input; tablet personal computers (PCs); laptop PCs; personal digital assistants (PDAs); and other similar devices.

Above-incorporated U.S. Patent No. 6,803,906 to Morrison et al. discloses a touch system that employs machine vision to detect pointer interaction with a touch surface on which a computer-generated image is presented. A rectangular bezel or frame surrounds the touch surface and supports digital imaging devices at its corners. The digital imaging devices have overlapping fields of view that encompass and look generally across the touch surface. The digital imaging devices acquire images looking across the touch surface from different vantages and generate image data. Image data acquired by the digital imaging devices is processed by on-board digital signal processors to determine if a pointer exists in the captured image data. When it is determined that a pointer exists in the captured image data, the digital signal processors convey pointer characteristic data to a master controller, which in turn processes the pointer characteristic data to determine the location of the pointer in (x,y) coordinates relative to the touch surface using triangulation. The pointer coordinates are conveyed to a computer executing one or more application programs. The computer uses the pointer coordinates to update the computer-generated image that is presented on the touch surface. Pointer contacts on the touch surface can therefore be recorded as writing or drawing or used to control execution of application programs executed by the computer.

Above-incorporated U.S. Patent 7,460,110 to Morrison et al. discloses a touch system and method that differentiates between passive pointers used to contact a touch surface so that pointer position data generated in response to a pointer contact with the touch surface can be processed in accordance with the type of pointer used to contact the touch surface. The touch system comprises a touch surface to be contacted by a passive pointer and at least one imaging device having a field of view looking generally along the touch surface. At least one processor communicates with the at least one imaging device and analyzes images acquired by the at least one imaging device to determine the type of pointer used to contact the touch surface and the location on the touch surface where pointer contact is made. The determined type of pointer and the location at which the pointer is determined to contact the touch surface are used by a computer to control execution of an application program executed by the computer.

In order to determine the type of pointer used to contact the touch surface, in one embodiment a curve of growth method is employed to differentiate between different pointers. During this method, a horizontal intensity profile (HIP) is formed by calculating a sum along each row of pixels in each acquired image thereby to produce a one-dimensional profile having a number of points equal to the row dimension of the acquired image. A curve of growth is then generated from the HIP by forming the cumulative sum from the HIP.

Although passive touch systems provide some advantages over active touch systems and work extremely well, using both active and passive pointers in conjunction with a touch system provides more intuitive input modalities with a reduced number of processors and/or processor load.

Camera-based touch systems having multiple input modalities have been considered. For example, U.S. Patent No. 7,202,860 to Ogawa discloses a camera-based coordinate input device allowing coordinate input using a pointer or finger. The coordinate input device comprises a pair of cameras positioned in the upper left and upper right corners of a display screen. The field of view of each camera extends to a diagonally opposite corner of the display screen in parallel with the display screen. Infrared light emitting diodes are arranged close to the imagine lens of each camera and illuminate the surrounding area of the display screen. An outline frame is provided on three sides of the display screen. A narrow-width retro-reflection tape is arranged near the display screen on the outline frame. A non-reflective black tape is attached to the outline frame along and in contact with the retro-reflection tape. The retro-reflection tape reflects the light from the infrared light emitting diodes allowing the reflected light to be picked up as a strong white signal. When a user's finger is placed proximate to the display screen, the finger appears as a shadow over the image of the retro-reflectian tape.

The video signals from the two cameras are fed to a control circuit, which detects the border between the white image of the retro-reflection tape and the outline frame. A horizontal line of pixels from the white image close to the border is selected. The horizontal line of pixels contains information related to a location where the user's finger is in contact with the display screen. The control circuit determines the coordinates of the touch position, and the coordinate value is then sent to a computer.

U.S. Patent Nos. 6,335,724 and 6,828,959 to Takekawa et al. disclose a coordinate-position input device having a frame with a reflecting member for recursively reflecting light provided in an inner side from four edges of the frame fanning a rectangular form. Two optical units irradiate light to the reflecting members and receive the reflected light. With the mounting member, the frame can be detachably attached to a white board. The two optical units are located at both ends of any one of the frame edges forming the frame, and at the same time the two optical units and the frame body are integrated to each other.

U.S. Patent No. 6,587,339 to Takekawa et al. discloses a coordinate input/detection device with a coordinate input area. The coordinate input/detection device uses first and second light-emitting units to emit light to a plurality of retroreflectors provided around the coordinate input area. The plurality ofretro-renectors reflects the light from the first light-emitting unit toward a first light-receiving unit provided at one of first and second positions, and reflects the light from the second light-emitting unit toward a second light-receiving unit provided at the other position among the first and second positions. The first and second light-receiving units correspond to the first and second positions respectively. A position recognition unit recognizes whether each of the first and second light-receiving units is installed at the first position or the second position, based on an output signal of each of the first and second light-receiving units. Additionally, a coordinate detection unit detects coordinates of a pointing unit inserted into the coordinate input area, based on output signals of the first and second light-receiving units.

Multi-touch interactive input systems that receive and process input from multiple pointers using machine vision are also known. One such type of multi-touch interactive input system exploits the well-known optical phenomenon of frustrated total internal reflection (FTIR). According to the general principles of FTIR, the total internal reflection (TIR) of light traveling through an optical waveguide is frustrated when an object such as a pointer touches the optical waveguide surface, due to a change in the index of refraction of the optical waveguide, causing some light to escape from the optical waveguide at the touch point. Machine vision is employed to capture images of the optical waveguide including the escaping light, and to process the images to identify the position of each pointer contacting the optical waveguide surface. One example of an FTIR multi-touch interactive input system is disclosed in U.S. Patent Application Publication No. 2008/0029691 to Han.

U.S. Patent Application Publication No. 2007/0291008 to Wigdor et al. discloses a system comprising a touch table having a display. Users can touch the front surface or the back surface of the display. The front and back touch surfaces are calibrated with each other and with displayed images. Additionally, Wigdor et al. disclose using such a system in a vertical arrangement where the display is arranged vertically on, for example, a stand. In use, a user stands to one side of the display, while images are projected onto the front surface of the display. The user can manipulate the display without obstructing the view to an audience in front of the display.

Although multi-touch input systems are known, improvements are desired. It is therefore an object to provide a novel interactive input system and novel components therefor.

### Summary of the Invention

Accordingly, in one aspect there is provided a display panel for an interactive input system, the display panel comprising first and second touch surfaces on opposite major sides thereof and a touch detection arrangement to detect touch input on one or both of said touch surfaces.

In one embodiment, the touch detection arrangement comprises a first system to detect touch input on the first touch surface and a second system to detect touch input on the second touch surface. At least one of the first system and the second system is a machine vision-based touch detection system. When both the first system and the second system are machine vision-based touch detection systems, the machine vision-based touch detection system are either the same or are different.

In one embodiment, at least one of the machine vision-based touch detection systems comprises at least two imaging devices looking generally across a respective touch surface from different vantages. The at least one imaging system comprises a bezel at least partially surrounding the respective touch surface and having a surface in the field of view of the at least one imaging system. The bezel surface may comprise at least one curved portion joining adjacent straight portions.

In another embodiment, the other machine vision-based touch detection system captures images of the display panel including totally internally reflected light within the display panel that escapes in response to pointer contacts with the other touch surface. The other machine-based touch detection system comprises a camera device looking through the display panel and capturing images including escaping totally internally reflected light.

According to another aspect there is provided an interactive input system comprising a display panel comprising touch surfaces on opposite major sides of the display panel, a touch detection arrangement to detect touch input made on one or more of the touch surfaces and processing structure communicating with the touch detection arrangement and processing data for locating each touch input.

In one embodiment, the touch detection arrangement comprises an imaging system associated with each of the touch surfaces system. At least one of the image systems may comprise at least two imaging devices looking generally across a respective touch surface from different vantages. The at least one imaging system may further comprises a bezel at least partially surrounding the respective touch surface and having a surface in the field of view of said at least one imaging system. The bezel may comprise at least one curved portion joining adjacent straight portions.

In another embodiment, the another of the imaging systems captures images of the display panel including totally internally reflected light within the display panel that escapes in response to pointer contact with the other touch surface.

In still another aspect, there is provided a bezel for an interactive input system, the bezel comprising at least two straight segments extend along intersecting sides of a display panel and at least one curved portion interconnecting the straight segments, the straight and curved segments comprising an inwardly reflective surface that is generally normal to the plane of said display panel.

### Brief Description of the Drawings

Embodiments will now be described more fully with reference to the accompanying drawings in which:

Figure 1 is a partial perspective view of an interactive input system;

Figure 2 is a block diagram of the interactive input system of Figure 1;

Figure 3 is a block diagram an imaging device forming part of the interactive input system of Figure 1;

Figure 4 is a block diagram of a master controller forming part of the interactive input system of Figure 1;

Figure 5 is a cross-sectional side elevational view of an assembly forming part of the interactive input system Figure 1;

Figures 6a and 6b are cross-sectional front and rear elevational views, respectively, of the assembly of Figure 5;

Figure 7 is an exploded perspective view of a portion of a display panel forming part of the assembly of Figure 5;

Figures 8a to 8e are examples of display content presented on the display panel of Figure 7;

Figure 9 is a partial perspective view of another embodiment of an interactive input system;

Figure 10 is a block diagram view of the interactive input system of Figure 9;

Figure 11a is a cross-sectional view of a portion of a display panel forming part of the interactive input system of Figure 9;

Figure 11b is a cross-sectional view of another portion of the display panel of Figure 11a, having been contacted by a pointer;

Figure 12 is a partial perspective view of another embodiment of an assembly for the interactive input system of Figure 1;

Figures 13a and 13b are cross-sectional front and rear elevational views, respectively, of the assembly of Figure 12;

Figures 14a and 14b are perspective views of a portion of a bezel forming part of the assembly of Figure 12;

Figure 15 is a partial perspective view of another embodiment of an assembly for the interactive input system of Figure 9;

Figure 16 is a cross-sectional perspective view of a portion of another embodiment of an assembly for the interactive input system of Figure 9; and

Figure 17 is a cross-sectional perspective view of a portion of still yet another embodiment of an assembly for the interactive input system of Figure 9.

### Detailed Description of the Embodiments

The following is directed to an interactive input system comprising a display panel having touch detection capabilities associated with the opposite major surfaces of the display panel. The display panel may be an interactive whiteboard, or may be another form of display panel. The interactive input system is configured to allow one or more users positioned adjacent opposite major surfaces of the display panel to input information into the interactive input system through interaction with either of the major surfaces of the display panel. The manner by which touch input associated with each touch surface is detected may be the same or may be different. The interactive input system has many applications, and can be used for example for communication between users who are separated by a barrier or wall, such as a wall separating a cleanroom environment from a non-cleanroom environment, or a wall of a biomedical research facility separating a quarantine environment from a non-quarantine environment, or walls in other facilities such as correctional facilities, medical/hospital facilities, malls, museums, offices, cubicle areas, and the like. The interactive input system may also be integrated into the wall of a vehicle, such as for example, an emergency response vehicle, an armored vehicle, or a command and control vehicle. The interactive input system has a generally robust construction and is suitable for use either indoors or outdoors, allowing the interactive input system to be integrated into a wall separating indoors from outdoors. However, the interactive input system does not need to be integrated into a wall, but rather may be supported in a ''free-standing" manner.

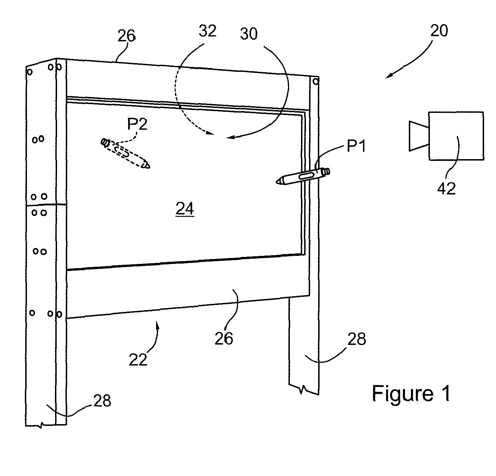

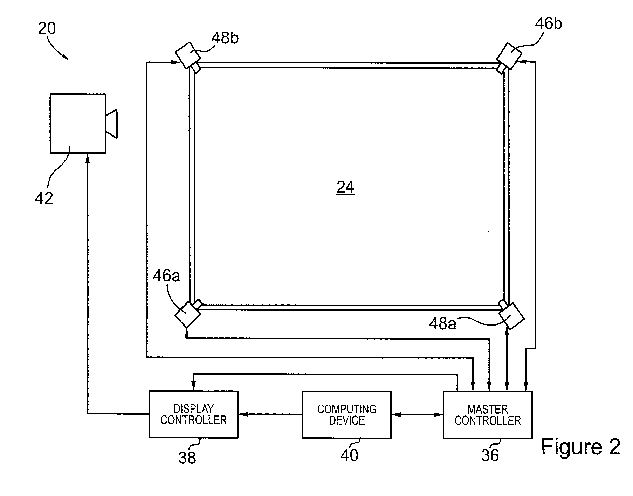

Turning now to Figures 1 to 4, an interactive input system that allows a user to inject input such as digital ink, mouse events etc. into an application program is shown, and is generally identified by reference numeral 20. Interactive input system 20 comprises an assembly 22 that has a display panel 24 supported by upper and lower horizontal frame members 26 and uprights 28. Display panel 24 has a first touch surface 30 and a second touch surface 32, where the first and second touch surfaces 30 and 32 are on opposite major sides of the display panel 24. Display panel 24 is configured such that display content presented by the display panel is visible on both the first and second touch surfaces 30 and 32. The assembly 22 employs machine vision-based touch detection to detect passive pointers P1 and P2 such as fingers or other suitable objects brought into regions of interest in proximity with the first and second touch surfaces 30 and 32 as will be described.

Assembly 22 is coupled to a master controller 36, which in turn is coupled to a general purpose computing device 40 and to a video controller 38. Video controller 38 is in communication with an image generating unit 42, and communicates display output to the image generating unit 42 for display on the display panel 24. In this embodiment, image generating unit 42 is a visible light projector. The general purpose computing device 40 executes one or more application programs and uses pointer location information communicated from the master controller 36 to generate and update the display output that is provided to the video controller 38 for output to the image generating unit 42, so that the image presented on the display panel 24 reflects pointer activity proximate one or both of the touch surfaces 30 and 32. In this manner, pointer activity proximate one or both of the touch surfaces 30 and 32 can be recorded as writing or drawing or used to control execution of one or more application programs running on the general purpose computing device 40. The video controller 38 also modifies the display output provided to the image generating unit 42 when a pointer ambiguity condition is detected to allow the pointer ambiguity condition to be resolved thereby to improve pointer verification, localization and tracking.

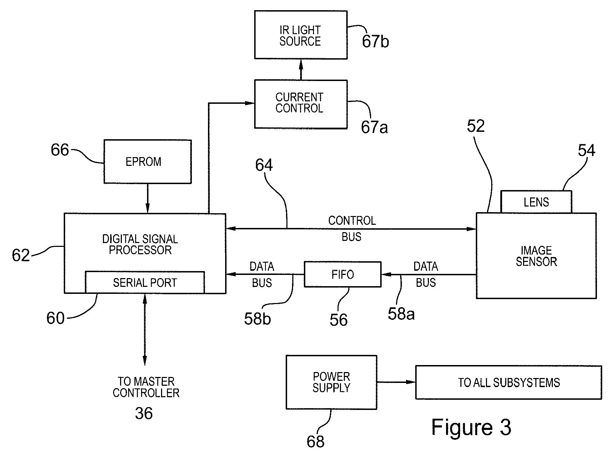

Imaging systems are associated with the touch surfaces 30 and 32. Each imaging system comprises imaging devices positioned adjacent corners of the respective touch surface 30 and 32. In this embodiment, imaging devices 46a, 48a are positioned adjacent the two bottom corners of first touch surface 30, and imaging devices 46b, 48b are positioned adjacent the two top corners of second touch surface 32. The imaging devices of each pair look generally across their respective touch surface from different vantages. Referring to Figure 3, one of the imaging devices is better illustrated. As can be seen, each imaging device comprises an image sensor 52 such as that manufactured by Micron Technology, Inc. of Boise, Idaho under model No. MT9V022 fitted with an 880 nm lens 54 of the type manufactured by Boowon Optical Co. Ltd. under model No. BW25B. The lens 54 provides the image sensor 52 with a field of view that is sufficiently wide at least to encompass the respective touch surface. The image sensor 52 communicates with and outputs image frame data to a first-in first-out (FIFO) buffer 56 via a data bus 58a. A digital signal processor (DSP) 62 receives the image frame data from the FIFO buffer 56 via a second data bus 58b and provides pointer data to the master controller 36 via a serial input/output port 60 when one or more pointers exist in image frames captured by the image sensor 52. The image sensor 52 and DSP 62 also communicate over a bi-directional control bus 64. An electronically programmable read only memory (EPROM) 66, which stores image sensor calibration parameters, is connected to the DSP 62. DSP 62 is also connected to a current control module 67a. which is connected to an infrared (IR) light source 67b. IR light source 67b comprises one or more IR light emitting diodes (LEDs) and associated lens assemblies and provides IR backlighting over the respective touch surface. Of course, those of skill in the art will appreciate that other types of suitable radiation sources to provide backlighting over the respective touch surface may be used, The imaging device components receive power from a power supply 68.

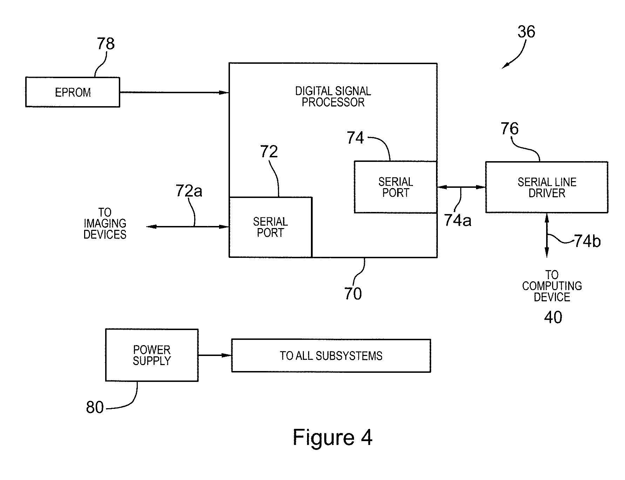

Figure 4 better illustrates the master controller 36. Master controller 36 comprises a DSP 70 having a first serial input/output port 72 and a second serial input/output port 74. The master controller 36 communicates with the imaging devices 46a, 46b, 48a and 48b via first serial input/output port 72 over communication lines 72a. Pointer data received by the DSP 70 from the imaging devices 46a, 46b, 48a and 48b is processed by the DSP 70 to generate pointer location data. DSP 70 communicates with the general purpose computing device 40 via the second serial input/output port 74 and a serial line driver 76 over communication lines 74a and 74b. Master controller 36 further comprises an EPROM 78 storing interactive input system parameters that are accessed by DSP 70. The master controller components receive power from a power supply 80.

The general purpose computing device 40 in this embodiment is a personal computer or the like comprising, for example, a processing unit, system memory (volatile and/or non-volatile memory), other non-removable or removable memory (e.g. a hard disk drive, RAM, ROM, EEPROM, CD-ROM, DVD, flash memory, etc.) and a system bus coupling the various computing device components to the processing unit. The general purpose computing device 40 may also comprise a network connection to access shared or remote drives, one or more networked computers, or other networked devices. The processing unit runs a host software application/operating system which, during execution, provides a graphical user interface that is presented on the touch surfaces 30 and 32 such that freeform or handwritten ink objects and other objects can be input and manipulated via pointer interaction with one or both of the touch surfaces 30 and 32.

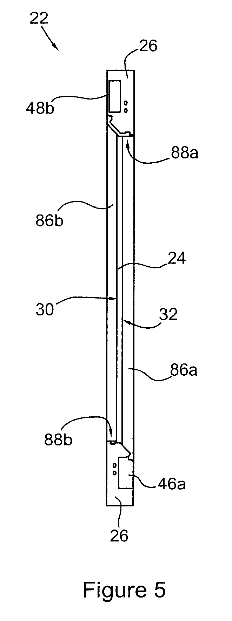

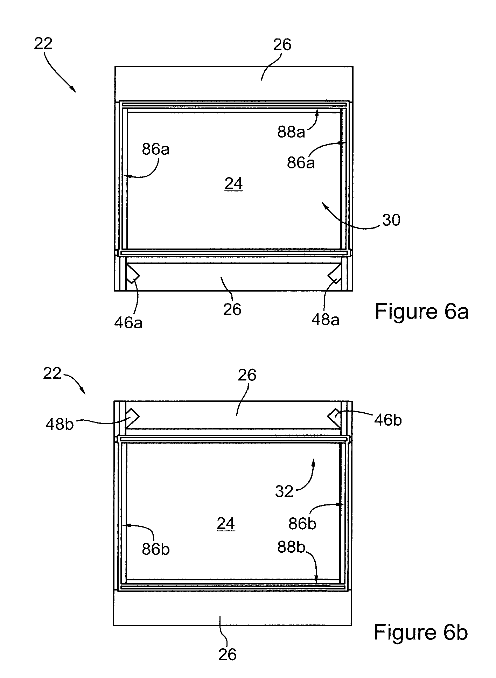

Turning now to Figures 5 to 7, the assembly 22 is further illustrated. In this embodiment, a bezel partially surrounds each of the touch surfaces 30 and 32. The bezel partially surrounding touch surface 30 comprises three (3) bezel segments 86a and 88a. Bezel segments 86a extend along opposite side edges of the touch surface 30 while bezel segment 88a extends along the top edge of the touch surface 30. Similarly, the bezel partially surrounding touch surface 32 comprises three (3) bezel segments 86b and 88b. Bezel segments 86b extend along opposite side edges of the touch surface 30 while bezel segment 88b extends along the bottom edge of the touch surface 30. The inwardly facing surface of each bezel segment is coated or covered with highly reflective material such as for example retro-reflective material. To take best advantage of the properties of the retro-reflective material, the bezel segments 86a and 88a are oriented such that their inwardly facing surfaces seen by the imaging devices 46a and 48a extend in a plane generally normal to the plane of the touch surface 30 and the bezel segments 86b and 88b are oriented such that their inwardly facing surfaces seen by the imaging devices 46b and 48b extend in a plane generally normal to the plane of the touch surface 32.

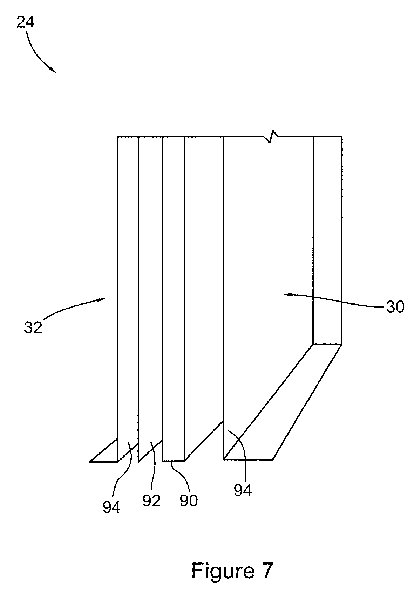

Figure 7 shows the structure of the display panel 24. As can be seen, the display panel 24 has a multilayered arrangement, and comprises a generally rectangular internal support 90 having a light diffusion layer 92 overlying its rear facing major surface. In this embodiment, the internal support 90 is a rigid sheet of acrylic or other suitable energy transmissive material, and the light diffusion layer 92 is a layer of V-CARE^{™} V-LITE^{™} fabric manufactured by Vintex Inc. of Mount Forest, Ontario, Canada. V-CARE^{™} V-LITE^{™} barrier fabric comprises a durable, lightweight polyvinylchloride (PVC) coated yarn that suitably diffuses visible light for displaying the display output of the image generating unit 42. Overlying both the front facing major surface of the internal support 90 and the diffusion layer 92 are clear protective layers 94. In this embodiment, each protective layer 94 is a thin sheet of polycarbonate over which is applied a generally smooth coating of Marnot^{™} material, produced by Tekra Corporation of New Berlin, Wisconsin, U.S.A. Although the interactive input system 20 may function without protective layers 94, protective layers 94 allow the display panel 24 to be touched while reducing the risk of damage to the underlying support 90 and the diffusion layer 92, such as by discoloration, snagging, tearing, creasing or scratching. Additionally, the protective layers 94 provide a generally smooth surface and thereby to reduce wear on pointers brought into contact with the touch surfaces 30 and 32. Furthermore, the protective layers 94 generally provide abrasion, scratch, environmental (e.g. rain, snow, dust, and the like) and chemical resistance to display panel 24, and thereby help to improve its durability.

In operation, the DSP 62 of each imaging device 46a, 46b, 48a and 48b, generates clock signals so that the image sensor 52 of each imaging device captures image frames at the desired frame rate. The clock signals provided to the image sensors 52 are synchronized such that the image sensors of the imaging devices 46a, 46b, 48a and 48b capture image frames substantially simultaneously. The DSP 62 of each imaging device also signals the current control module 67a. In response, each current control module 67a connects its associated IR light source 67b to the power supply 68 thereby illuminating the 1R light source resulting in 1R backlighting being provided over the touch surfaces 30 and 32. When no pointer is in proximity with the touch surfaces 30 and 32, image frames captured by the image sensors 52 comprise a substantially uninterrupted bright band as a result of the infrared backlighting reflected by the retro-reflective surfaces of the bezel segments. However, when one or more pointers are brought into proximity of one or both of the touch surfaces 30 and 32, each pointer occludes the IR backlighting reflected by the bezel segments and appears in captured image frames as a dark region interrupting the white bands.

Each image frame output by the image sensor 52 of each imaging device 46a. 46b, 48a and 48b is conveyed to its associated DSP 62. When a DSP 62 receives an image frame, the DSP 62 processes the image frame to detect the existence of one or more pointers. If one or more pointers exist in the image frame, the DSP 62 creates an observation for each pointer in the image frame. Each observation is defined by the area formed between two straight lines, one line of which extends from the focal point of the imaging device and crosses the right edge of the dark region representing the pointer and the other line of which extends from the focal point of the imaging device and crosses the left edge of the dark region representing the pointer. The DSP 62 then conveys the observation(s) to the master controller 36 via serial line driver 76 and communication lines 74a and 74b.

The master controller 36 in response to received observations from the imaging devices 46a, 46b, 48a and 48b, examines the observations to determine those observations from each pair of imaging devices 46a, 48a, or 46b, 48b, that overlap. When a pair of imaging devices 46a, 48a, or 46b, 48b sees the same pointer resulting in observations that overlap, the center of the resultant bounding box, that is delineated by the intersecting lines of the overlapping observations, and hence the position of the pointer in (x,y) coordinates relative to the touch surfaces 30 and 32 is calculated using well known triangulation, as described in above-incorporated U.S. Patent No. 6,803,906 to Morrison et al.

The master controller 36 then examines the triangulation results to determine if one or more pointer ambiguity conditions exist. If no pointer ambiguity condition exists, the master controller 36 outputs each calculated pointer position to the general purpose computing device 40. The general purpose computing device 40 in turn processes each received pointer position and updates the display output provided to the video controller 38, if required. The display output generated by the general purpose computing device 40 in this case passes through the video controller 38 unmodified and is received by the image generating unit 42. The image generating unit 42 in turn projects an image reflecting pointer activity that is presented on the display panel 24. In this manner, pointer interaction with one or both of the touch surfaces 30 and 32 can be recorded as writing or drawing or used to control execution of one or more application programs running on the general purpose computing device 40.

If one or more pointer ambiguity conditions exist, the master controller 36 conditions the video controller 38 to dynamically manipulate the display output of the general purpose computing device 40 in a manner to allow each pointer ambiguity condition to be resolved as described in International PCT Application No. PCT/CA2010/000190, assigned to SMART Technologies ULC of Calgary, Alberta, Canada, assignee of the subject application, the content of which is incorporated herein by reference in its entirety. Once resolved, the master controller 36 outputs each calculated pointer position to the general purpose computing device 40. The general purpose computing device 40 in turn processes each received pointer position and updates the display output provided to the video controller 38, if required. The display output generated by the general purpose computing device 40 again passes through the video controller 38 unmodified and is received by the image generating unit 42. The image generating unit 42 in turn projects an image reflecting pointer activity that is presented on the display panel 24.

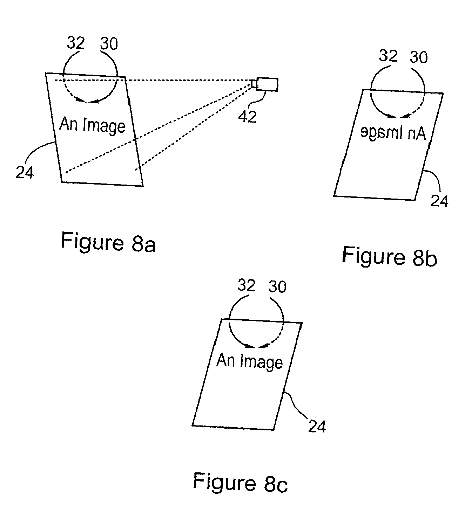

As will be appreciated, the general purpose computing device 40 may run one of a variety of application programs configured to take advantage of the dual opposite touch surfaces of display panel 24. For example, one application program may allow the images output by the image generating unit 42 that are presented on the display panel 24 to be oriented according to the touch surface of the display panel 24 on which pointer activity is detected. Figures 8a to 8c show an example of one such application program. As can be seen in Figure 8a, the image output by the image generating unit 42 is presented on display panel 24 in an orientation beneficial to users looking at the touch surface 30. The image presented on the display panel 24 as a result is reversed to users looking at the touch surface 32 as shown in Figure 8b. However, when a user interacts with the touch surface 32, the display output provided to the image generating unit 42 by the general purpose computing device 40 is modified so that the image presented on the display panel 24 is in an orientation beneficial to users looking at the touch surface 32 as shown in Figure 8c. As will be appreciated, in this case the image presented on the display panel 24 is reversed to users looking at the touch surface 30. The orientation of the image projected by the image generating unit 42 changes whenever pointer interaction with a different touch surface occurs. Alternatively, the application program may allow the orientation of the presented image to be selected based on the type of pointer input, or may cause the image to revert to a different orientation after a threshold time period has been reached. If desired, the application program may have a feature that inhibits the orientation of the image output by the image generating unit 42 from being changed.

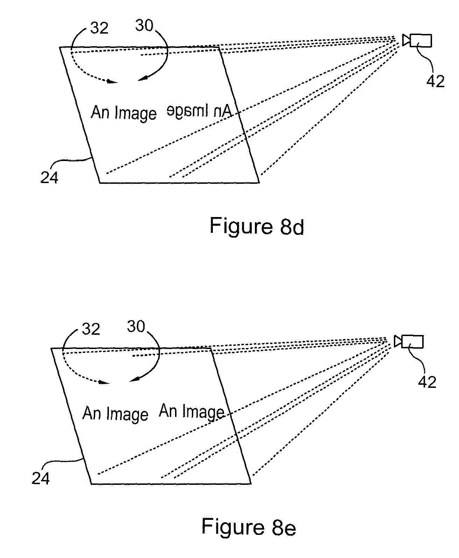

Other configurations of display content are possible. For example, the image generating unit 42 may output more than one image for side-by-side (or top-to-bottom) presentation on the display panel 24. In this case, initially the orientation of each image is reversed so that one image is in an orientation beneficial to users looking at the touch surface 30 and one image is in an orientation beneficial to users looking at the touch surface 32 as shown in Figure 8d. The orientation of each of the images can however be changed through pointer interaction with the touch surfaces 30 and 32. As is shown in Figure 8e, the image initially oriented to benefit users looking at the touch surface 32 has been reoriented to benefit users looking at the touch surface 30 as a result of pointer interaction with the touch surface 30 in a region corresponding to the reoriented image.

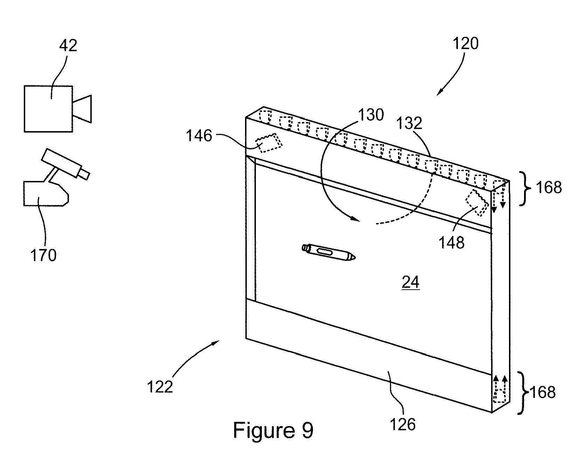

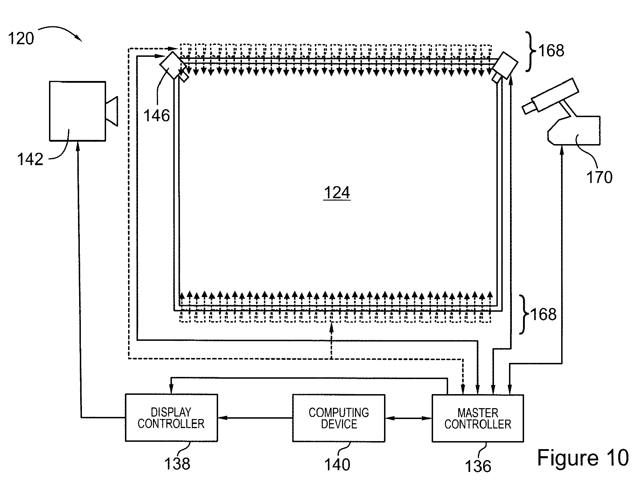

Figures 9 to 11b show another embodiment of an interactive input system generally identified by reference numeral 120. Interactive input system 120 comprises an assembly 122 having a display panel 124 surrounded by a frame 126. Display panel 124 has a first touch surface 130 and a second touch surface 132.. where the first and second touch surfaces 130 and 132 are on opposite major sides of the display panel 124. The display panel 124 is configured such that display content is visible on both of the first and second touch surfaces 130 and 132. Similar to the previous embodiment, the assembly 122 employs machine vision to detect pointers brought into regions of interest in proximity with the first and second touch surfaces 130 and 132.

Assembly 122 is coupled to a master controller 136, which in turn is coupled to a general purpose computing device 140, to a video controller 138 and to a frustrated total internal reflection (FTIR) camera 170. The FTIR camera 170 is positioned adjacent to the display panel 124 and captures infrared images of the first touch surface 130 that are communicated to the master controller 136 for processing. Video controller 138 is in communication with an image generating unit 142, and communicates display output to the image generating unit 142 for display on the display panel 124. ln this embodiment, image generating unit 142 is also a visible light projector. The general purpose computing device 140 executes one or more application programs and uses pointer location information communicated from the master controller 136 to generate and update the display output that is provided to the video controller 138 for output to the image generating unit 142, so that the image presented on the display panel 124 reflects pointer activity proximate one or both of the touch surfaces 130 and 132. In this manner, pointer activity proximate one or both of the touch surfaces 130 and 132 can be recorded as writing or drawing or used to control execution of one or more application programs running on the general purpose computing device 140, The video controller 138 also modifies the display output provided to the image generating unit 142 when a pointer ambiguity condition is detected in the same manner described above to improve pointer verification, localization and tracking.

In this embodiment, imaging devices 146 and 148 similar to those of the previous embodiment are positioned adjacent the two top corners of first touch surface 130 and look generally across the touch surface 130 from different vantages. A bezels partially surrounds the touch surface 130 and comprises three (3) bezel segments. Two of the bezel segments extend along opposite side edges of the touch surface 130 while the third bezel segment extends along the bottom edge of the touch surface 130. The inwardly facing surface of each bezel segment is coated or covered with retro-reflective material. To take best advantage of the properties of the retro-reflective material, the bezel segments are oriented such that their inwardly facing surfaces seen by the imaging devices 146 and 148 extend in a plane generally normal to the plane of the touch surface 130.

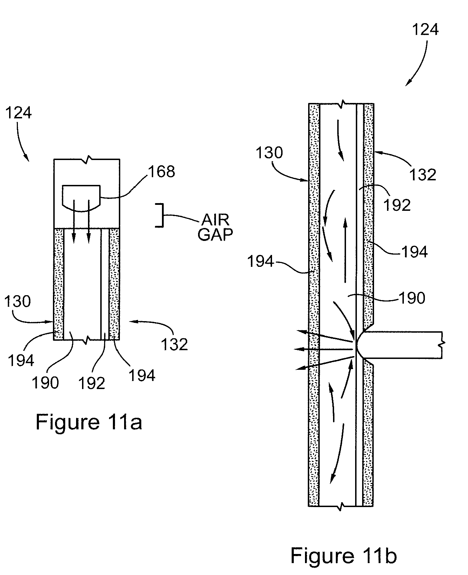

The structure of display panel 124 is similar to that of display panel 24 described above, and with reference to Figure 5 and is best shown in Figures 11a and 11b. As can be seen, the display panel 124 comprises a generally rectangular internal support 190 having a light diffusion layer 192 overlying its rear facing major surface. In this embodiment the internal support is a rigid sheet of acrylic or other suitable light transmissive material and the light diffusion layer 92 is the V-CARE® V-LITE® barrier fabric described above. Overlying both the front major surface of the internal support 190 and the diffusion layer 192 are clear protective layers 194. An array or bank of IR light emitting diodes 168 is positioned adjacent both the upper and lower surfaces of the internal support 190. The IR light emitting diodes 168 are configured to emit infrared light into the internal support 190 that is totally internally reflected and remains trapped within the internal support 190. In this embodiment, the upper and lower surfaces along which the IR light emitting diodes 168 are positioned, are flame-polished to facilitate reception of emitted IR light. An air gap of 1-2 millimetres (mm) is maintained between the IR light emitting diodes and the upper and lower surfaces of the internal support 190 in order to reduce heat transmittance from the IR light emitting diodes 168 to the internal support 190, and thereby mitigate heat distortions in the internal support 190. Bonded to the other side surfaces of the internal support 190 is reflective tape to reflect light back into the internal support 190.

In this embodiment, the V-CARE® V-LITE® barrier fabric has a rubberized backing with, effectively, tiny bumps enabling the barrier fabric to sit directly on the rear major surface of the internal support 190 without causing significant, if any, frustration of the IR light totally internally reflected within the internal support 190 until such time as it is compressed against the rear major surface of the internal support 190 upon contact by a pointer. The rubberized backing also grips the rear major surface of the internal support 190 to resist sliding relative to the internal support 190 as the pointer is moved along the diffusion layer 192, thereby resisting bunching up of the barrier fabric.

The lightweight weave of the V-CARE® V-LITE® barrier fabric together with the tiny bumps obviate the requirement to specifically engineer an air gap between diffusion layer 192 and the internal support 190. Another advantage of the V-CARE® V-LITE® barrier fabric is that it is highly resilient and therefore well-suited to touch sensitivity; it very quickly regains its original shape when pressure from a pointer is removed, due to the natural tensioning of the weave structure, abruptly ceasing the release of IR light from the internal support 190 that occurs at the touch points. As a result, the interactive input system 120 is able to detect touch points with high spatial and temporal resolution. The weave structure also diffuses light approaching the second touch surface 132 from the outside, thereby inhibiting the ingress of visible light into the assembly 122.

Another attribute of the V-CARE® V-LITE® barrier fabric is that it permits, within an operating range, emission of varying amounts of escaping light as a function of the degree to which it is compressed against the rear major surface of the internal support 190. As such, image processing algorithms can gauge a relative level of pressure applied based on the amount of light being emitted from the display panel 124 adjacent a touch point, and can provide this information as input to application programs thereby providing increased degrees of control over certain applications. The diffusion layer 192 substantially reflects the IR light escaping the internal support 190, and diffuses visible light being projected onto it in order to display the projected image.

Although the V-CARE® V-LITE® barrier fabric described above diffuses visible light, reflects infrared light, resists sliding relative to the internal support 190, can sit against the rear major surface of the internal support 190 without registering false touches, and is highly resilient so as to enable high spatial and temporal resolution of a touch point, it will be understood however that alternative resilient materials having suitable properties may be employed. For example, certain of the above properties could be provided by one or more material layers alone or in a combination. For example, a resilient diffusion layer could comprise a visible diffusion layer for presenting the display content projected by the image generating unit 142 that, overlies an infrared reflecting layer for reflecting infrared light escaping from the internal support 190, and which itself overlies a gripping layer facing the internal support 190 for resisting sliding while leaving a suitable air gap to avoid significantly frustrating totally internally reflected IR light until pressed against the internal support 190.

Unlike the previous embodiment which uses the same machine vision-based technique to detect touch input associated with the first and second touch surfaces, the interactive input system 120 uses different machine vision-based techniques to detect touch input associated with the first and second touch surfaces. In operation, the DSP of each imaging device 146 and 148, generates clock signals so that the image sensor of each imaging device captures image frames at the desired frame rate. The clock signals provided to the image sensors are synchronized such that the image sensors of the imaging devices 146 and 148 capture image frames substantially simultaneously. The DSP of each imaging device also signals the current control module. In response, each current control module connects its associated IR light source to the power supply thereby illuminating the IR light source resulting in IR backlighting being provided over the touch surface 130. When no pointer is in proximity with the touch surface 130, image frames captured by the image sensors comprise a substantially uninterrupted bright band as a result of the infrared backlighting reflected by the retro-reflective surfaces of the bezel segments. However, when one or more pointers are brought into proximity of the touch surface 130, each pointer occludes the IR backlighting reflected by the bezel segments and appears in captured image frames as a dark region interrupting the white bands.

Captured image frames are processed by the DSPs of the imaging devices 146 and 148 in the same manner described above and as a result, observations generated by the DSPs are conveyed to the master controller 136. The master controller 136 in response to received observations from the imaging devices 146 and 148, examines the observations to determine the observations that overlap- When the imaging devices 146 and 148 see the same pointer resulting in observations that overlap, the center of the resultant bounding box, that is delineated by the intersecting lines of the overlapping observations, and hence the position of the pointer in (x,y) coordinates relative to the touch surface 130 is calculated as described above. Similarly, the master controller 136 then examines the triangulation results to determine if one or more pointer ambiguity conditions exist. If no pointer ambiguity condition exists, the master controller 136 outputs each calculated pointer position to the general purpose computing device 140. The general purpose computing device 140 in turn processes each received pointer position and updates the display output provided to the video controller 138, if required. The display output generated by the general purpose computing device 140 in this case passes through the video controller 138 unmodified and is received by the image generating unit 142. The image generating unit 142 in turn projects an image reflecting pointer activity that is presented on the display panel 124. In this manner, pointer interaction with the touch surface 130 can be recorded as writing or drawing or used to control execution of one or more application programs running on the general purpose computing device 140.

If one or more pointer ambiguity conditions exist, the master controller 136 conditions the video controller 138 to dynamically manipulate the display output of the general purpose computing device 140 in a manner to allow each pointer ambiguity condition to be resolved as described above. Once resolved, the master controller 136 outputs each calculated pointer position to the general purpose computing device 140. The general purpose computing device 140 in turn processes each received pointer position and updates the display output provided to the video controller 138, if required. The display output generated by the general purpose computing device 140 again passes through the video controller 38 unmodified and is received by the image generating unit 142. The image generating unit 142 in turn projects an image reflecting pointer activity that is presented on the display panel 124.

At the same time, IR light emitted by the banks of IR light emitting diodes 168 is also introduced into the internal support 190 through its flame-polished upper and lower surfaces. The IR light remains trapped within the internal support 190 and does not escape due to total internal reflection (TIR). However, as shown in Figure 11b, when a pointer contacts the second touch surface 132, the pressure of the pointer against the protective layer 194 compresses the resilient diffusion layer 192 against the internal support 190, causing the index of refraction of the internal support 190 at the contact point of the pointer, or "touch point", to change. This change "frustrates" the TIR at the touch point causing IR light to reflect at an angle that allows it to escape from the internal support 190 in a direction generally perpendicular to the plane of the internal support 190 at the touch point. The escaping IR light reflects off of the pointer and scatters locally downward through the internal support 190 and exits the internal support 190. As a result, the escaping 1R light exits the display panel 124 and is captured in images acquired by the FTIR camera 170. This occurs for each pointer contacting the second touch surface 132.

As each touch point is moved along the second touch surface 132, compression of the resilient diffusion layer 192 against the internal support 190 occurs and thus the escape of IR light from the display panel 124 allows the touch point movement to be tracked. During touch point movement or upon removal of the touch point, decompression of the resilient diffusion layer 192 where the touch point had previously been due to the resilience of the diffusion layer 192, causes escape of IR light from internal support 190 to once again cease. As such, IR light escapes from the support layer 190 only at touch point location(s).

The FTIR camera 170 captures two-dimensional, IR video images of the first touch surface 30. 1R light having been filtered from the display content projected by image generating unit 142 ensures that the background of the images captured by FTIR camera 170 is substantially black. When the second touch surface 132 of the display panel 124 is contacted by one or more pointers as described above, the images captured by FTIR camera 170 comprise one or more bright points corresponding to respective touch points. The master controller 136 which receives captured images from the FTIR camera 170 performs image processing to detect the coordinates and characteristics of the one or more bright points in the captured images, as described in U.S. Patent Application Publication No. 2010/0079385 to Holmgren et al., assigned to SMART Technologies ULC of Calgary, Alberta, Canada, assignee of the subject application, the content of which is incorporated herein in its entirety. The detected coordinates are then mapped to display coordinates, and provided to a host software application running on the general purpose computing device 140.

The host application tracks each touch point based on the received touch point data, and handles continuity processing between image frames. More particularly, the host application based on the touch point data determines whether to register a new touch point, modify an existing touch point, or cancel/delete an existing touch point. Thus, the host application registers a Contact Down event representing a new touch point when it receives touch point data that is not related to an existing touch point, and accords the new touch point a unique identifier. Touch point data may be considered unrelated to an existing touch point if it characterizes a touch point that is a threshold distance away from an existing touch point, for example. The host application registers a Contact Move event representing movement of the touch point when it receives touch point data that is related to an existing pointer, for example by being within a threshold distance of, or overlapping an existing touch point, but having a different focal point. The host application registers a Contact Up event representing removal of the touch point from the second touch surface 132 of the display panel 124 when touch point data that can be associated with an existing touch point ceases to be received from subsequent images. The Contact Down, Contact Move and Contact Up events are passed to respective elements of the user interface such as graphical objects, widgets, or the background/canvas, based on the element with which the touch point is currently associated, and/or the touch point's current position.

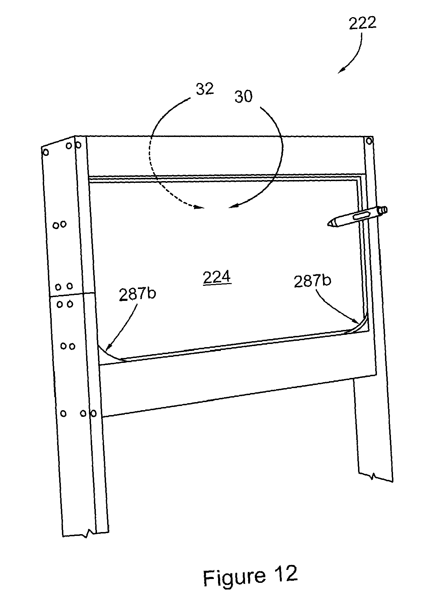

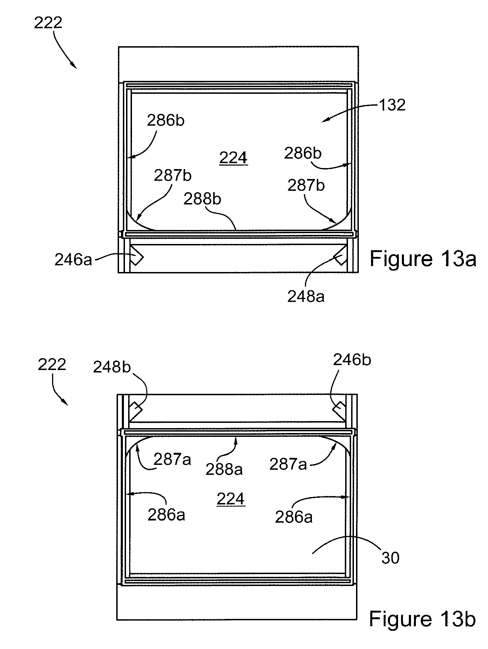

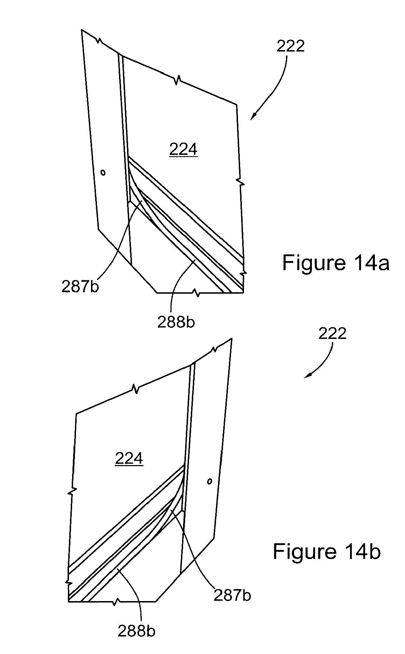

Figures 12 to 14b show another embodiment of an assembly 222 for use with the interactive input system 20 described above with and reference to Figures 1 to 7. The assembly 222 is the same as the assembly 22 with the exception of the bezels that partially surround the touch surfaces 30 and 32. In this embodiment, the bezel partially surrounding the touch surface 30 comprises bezel segments 286a that extend along opposite side edges of the first touch surface 30 and a bezel segment 288a that extends along the top edge of the first touch surface 30. In addition, the bezel segment 288a is joined to adjacent bezel segments 286a by curved corner segments 287a. Similarly, the bezel partially surrounding the touch surface 32 comprises bezel segments 286b that extend along opposite side edges of the second touch surface 32 and a bezel segment 288b that extends along the bottom edge of the second touch surface 32. In addition, the bezel segment 288b is joined to adjacent bezel segments 286b by curved corner segments 287b. The inwardly facing surfaces of the bezel segments and corner segments are coated or covered with retro-reflective material. As will be appreciated, the use of curved corner segments in the bezels advantageously provides a retro-reflective band that is more clearly visible to the imaging devices 246a, 246b, 248a and 248b than the retro-reflective surfaces of the previous embodiment and thus, improves the accuracy of touch detection for pointers positioned adjacent the curved corner segments.

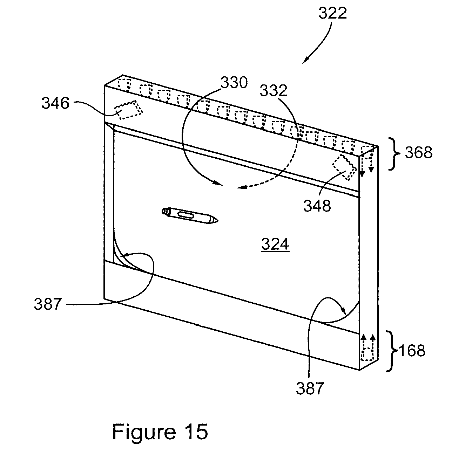

Figure 15 illustrates another embodiment of an assembly 322 for use with the interactive system 120 described above in connection with Figures 9 to 11b. The assembly 322 is the same as the assembly 122 with the exception of the bezel that partially surrounds the touch surface 130. In this embodiment, the bezel partially surrounding the touch surface 130 is similar to that shown in Figures 12 to 14b.

As will be understood by those of skill in the art, bezels comprising curved corner segments are not limited for use with dual sided interactive input systems, and may be used with single-sided interactive input systems.

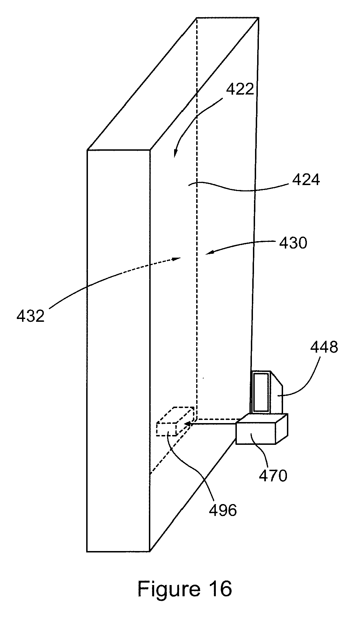

Figure 16 shows another embodiment of an assembly 422 for use with interactive input system 120 described above with reference to Figures 9 to 11b. In this embodiment, the FTIR camera 470 is mounted near one of the imaging devices 448 and is oriented such that its optical axis is aimed at and generally perpendicular to the first touch surface 430. A hole (not shown) in the diffusion layer of the display panel 424 allows the FTIR camera 470 to capture images of pointer interactions with the second touch surface 432 via a field of view (FOV) redirector 496. FOV redirector 496 may be a refractive element, such as a prism, a reflective element, such as a mirror, or a waveguide, such as an optical fiber-based device.

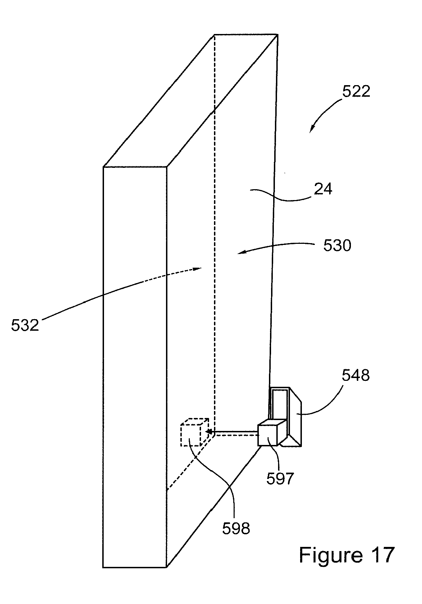

Figure 17 shows still another embodiment of an assembly 522 for use with interactive input system 120 described above with reference to Figures 9 to 11b. In this embodiment, a portion of the field of view of one of the imaging devices 548 looks at a FOV redirector 597, which redirects the field of view portion through a hole (not shown) in the diffusion layer to a second FOV redirector 598. FOV redirectors 597 and 598 allow imaging device 548 to also look across second touch surface 532 to capture images of pointer interactions,with the second touch surface 532. FOV redirectors 584 and 586 may be refractive elements, such as prisms, or reflective elements, such as mirrors, or a combination of the two.

In the embodiments described above, the imaging devices communicate with the master controller via communication lines. As will be appreciated, the communication lines may be embodied in a serial bus, a parallel bus, a universal serial bus (USB), an Ethernet connection or other suitable wired connection. Alternatively, the imaging devices may communicate with the master controller by means of a wireless connection using a suitable wireless protocol such as for example Bluetooth, WiFi, ZigBee, ANT, IEEE 802.15.4, Z-Wave etc.. Similarly, the master controller may communicate with the video controller and/or the general purpose computing device over one of a variety of wired connections such as for example, a universal serial bus, a parallel bus, an RS-232 connection, an Ethernet connection etc., or over a wireless connection.

The display panel of the interactive input systems described above may be of any suitable size, including a large size. For example, the interactive input systems described herein may be used to form a large scale display panel such as that described in U.S. Patent Application Publication No. 2006/0244734 to Hill et al., assigned to SMART Technologies ULC of Calgary, Alberta, Canada, assignee of the subject application, the content of which is incorporated herein by reference in its entirety.

While the display panels have been described as comprising an internal support formed of acrylic, those of skill in the art will appreciate that the internal support may be formed of other suitable energy transmissive materials. For example, the internal support may be formed of clear or translucent materials, such as for example glass or Lexan.

While the display panel of the embodiments described above is generally rigid, those of skill in the art will appreciate that this is not required. If desired, the display panel may instead may be flexible. In this case, the display panel may be wound into a roll so as to enable the display panel to be more easily transported between uses as desired.

While the pointers used with the above described interactive input systems are passive pointers, active pointers (i.e. light pens) may also be used such as those described in U.S. Patent Application Publication No. 2007/0165007 to Morrison et al., assigned to SMART Technologies ULC of Calgary, Alberta, Canada, assignee of the subject application, the content of which is incorporated herein by reference in its entirety.

While machine vision-based dual sided interactive input systems have been described above, those of skill in the art will appreciate that analog resistive, capacitive, electromagnetic, projected capacitive, IR curtain, or any other type of touch technology may be employed to detect touch input associated with the opposite major sides of the display panels.

While the above-described embodiments describe interactive input systems having one image generating unit for presenting display content on the display panel, in other embodiments, two image generating units may be used. For example, the interactive input systems described above may comprise two image generating units, and may run related applications, such as those described in U.S. Patent Application Publication No. 2009/0271848 to Leung et al., assigned to SMART Technologies ULC of Calgary, A1berta, Canada, assignee of the subject application, the content of which is incorporated herein by reference in its entirety and in PCT Application Nos. PCT/CA20091000014 and PCT/CA2009/001223 assigned to SMART Technologies ULC of Calgary, Alberta, Canada, assignee of the subject application, the contents of which are incorporated herein by reference in their entirety.

Although embodiments have been described with particular reference to the figures, those of skill in the art will appreciate that variations and modifications may be made with departing from the spirit and scope thereof as defined by the appended claims.

## Claims

1. A display panel for an interactive input system, the display panel comprising first and second touch surfaces on opposite major sides thereof and a touch detection arrangement to detect touch input on one or both of said touch surfaces.

2. A display panel according to claim 1 wherein the touch detection arrangement comprises a first system to detect touch input on the first touch surface and a second system to detect touch input on the second touch surface.

3. A display panel according to claim 2 wherein at least one of the first system and the second system is a machine vision-based touch detection system.

4. A display panel according to claim 3 wherein both the first system and the second system are machine vision-based touch detection systems.

5. A display panel according to claim 3 wherein the machine vision-based touch detection systems are either the same or are different.

6. A display panel according to claim 4 wherein at least one of the machine vision-based touch detection systems comprises at least two imaging devices looking generally across a respective touch surface from different vantages.

7. A display panel according to claim 5 wherein the at least one imaging system comprises a bezel at least partially surrounding the respective touch surface and having a surface in the field of view of said at least one imaging system.

8. A display panel according to claim 7 wherein the bezel surface comprises at least one curved portion joining adjacent straight portions.

9. A display panel according to claim 4 wherein each of the machine vision-based touch detection systems comprises at least two imaging devices looking generally across a respective touch surface from different vantages.

10. A display panel accoridng to claim 9 wherein each imaging system comprises a bezel at least partially surrounding the respective touch surface and having a surface in the field of view of said at least one imaging system.

11. A display panel according to claim 10 wherein the bezel surface comprises at least one curved portion joining adjacent straight portions.

12. A display panel according to any one of claims 4 to 8 wherein the other machine vision-based touch detection system captures images of the display panel including totally internally reflected light within said display panel that escapes in response to pointer contact with the other touch surface.

13. A display panel according to claim 12 wherein the other machine vision-based touch detection systems comprises a camera device looking through said display panel and capturing images including escaping totally internally reflected light.

14. An interactive input system comprising a display panel according to any one of claims 1 to 13 and processing structure communicating with the touch detection arrangement and processing touch input data generated thereby to locate pointer contacts on the first and second touch surfaces.

15. An interactive input system according to claim 14 further comprising an image generating unit responsive to said processing structure for presenting an image on said display panel.
